# DEMANDE DE BREVET EUROPEEN

(11) **EP 4 585 554 A1**
(43) Date de publication de la demande: **16.07.2025**
(21) Numéro de dépôt: 25150980.8
(22) Date de dépôt: 09.01.2025
(51) Int. Cl.: B66D 5/04, B66D 5/08, B66D 5/14, F16D 65/14, H02K 7/06

(54) **ACTIONNEUR ÉLECTROMÉCANIQUE CENTRIFUGE**

(30) Priorité: 09.01.2024 FR 2400191
(71) Demandeur: STROMAG FRANCE SAS, 18150 La Guerche-sur-l'Aubois (FR)
(72) Inventeur: DUCASSE, Hugo, 18150 La Guerche S/L'Aubois (FR)
(74) Mandataire: Santarelli

(57) **Abrégé**

Actionneur électromécanique comprenant : un moteur (3) ; un arbre entrainé par le moteur ; un piston (5) mobile selon une direction axiale entre une position basse et une position haute ; une tulipe supérieure (8) montée glissante sur l'arbre en dessous du piston ; une tulipe inférieure (7) fixée sur l'arbre ; des bras (9) s'étendant radialement, fixés sur l'arbre (4) entre les tulipes (7) et (8) ; des masselottes (10) de forme allongée selon la direction axiale, montées glissantes sur lesdits bras ; des rampes inférieures (11) et des rampes supérieures (12) en contact avec les extrémités axiales des masselottes, chaque rampe partant de l'une des tulipes (7) et (8) et s'éloignant de l'arbre en direction de l'autre tulipe, les masselottes étant ainsi interposées entre deux rampes afin de maintenir les tulipes écartées l'une de l'autre ; un électroaimant (14) pour le maintien du piston en position haute.

## Description

### Domaine technique

La présente demande concerne un actionneur électromécanique centrifuge, en particulier un actionneur pour frein de sécurité pour engin de levage.

### Etat de la technique

Un engin de levage du type grue, pont roulant, etc., comprend usuellement une ligne pourvue d'un tambour autour duquel s'enroulent des câbles de suspension auxquels la charge à lever est accrochée. Un tel engin de levage peut être utilisé pour lever des charges extrêmement lourdes, par exemple pesant de 50 à 500 tonnes.

L'engin de levage nécessite d'être équipé de freins pour plusieurs fonctions, notamment : ralentir puis arrêter la charge à l'approche d'une position d'arrêt (frein de service) ; bloquer l'engin de levage lorsqu'il est à sa position d'arrêt c'est-à-dire lorsque la charge est à la hauteur souhaitée (frein de parking) ; arrêter et bloquer l'engin de levage en cas de panne électrique ou, de façon plus générale, en cas d'urgence quelle qu'en soit la nature (frein de sécurité, encore appelé frein d'urgence ou « *failsafe brake* » en anglais).

Un frein de sécurité est notamment configuré pour se déclencher lorsqu'il n'est plus alimenté en électricité (en cas de panne électrique) : on parle de frein à manque ou de frein négatif. Les freins à disques se sont imposés depuis les années 1960 pour cet usage notamment car leur échauffement ne pose pas ou peu de problèmes.

Un frein de sécurité à disque comprend généralement :
- un disque solidaire de la ligne à freiner,
- une pince, comportant deux mâchoires ou plateaux aptes à venir pincer et serrer le disque, lesquels mâchoires sont généralement pourvues de plaquettes de friction,
- pour chaque mâchoire ou pour l'une des deux mâchoires seulement, une réserve d'énergie sous la forme d'un ressort, par exemple un ressort à rondelles ou un ressort hélicoïdal, configuré pour imposer un effort de pression sur ladite mâchoire dans le sens de la fermeture du frein, c'est-à-dire de façon à pousser et maintenir sous pression les mâchoires contre le disque et ainsi serrer la pince,

- un actionneur à commande électrique comprenant un piston qui, lorsqu'il est déployé, pousse un plateau sur lequel s'appuie l'extrémité du ressort, le piston en extension venant ainsi comprimer le ressort dans le sens de l'ouverture du frein ; ainsi lorsque l'actionneur est sous-tension, il peut être activé pour déplacer le plateau vers une position haute dans laquelle le ressort est comprimé, ce qui ouvre la pince et libère le disque (et donc la ligne) en rotation. En variante, le piston est configuré pour agir, non pas sur le ressort, mais sur les mâchoires (directement ou par l'intermédiaire d'un mécanisme) dans le sens de l'ouverture du frein.

Certaines installations anciennes possèdent encore des freins de sécurité à tambours. Ces installations comprennent une poulie solidaire de la ligne à freiner, une pince comportant deux sabots incurvés garnis d'un matériau de friction, aptes à pincer et serrer la poulie, ainsi qu'une réserve d'énergie et un actionneur tels que précédemment décrits pour les freins à disques.

Quel que soit le type de frein de sécurité considéré (à disque ou à tambour), en cas de panne électrique, l'actionneur devient brutalement inopérant, libérant le ressort ou les mâchoires (ou sabots incurvés), ce qui entraîne la fermeture du frein et l'arrêt de la charge.

Les contraintes qui déterminent les spécifications techniques des actionneurs des freins de sécurité pour engin de levage sont notamment : l'environnement de travail du frein en termes de température, d'hygrométrie, d'accès, d'encombrement disponible, etc. ; la course du frein ; l'effort de freinage imposé par le ressort, que l'actionneur doit contrecarrer pour ouvrir le frein, le ressort étant lui-même dimensionné en fonction des charges à lever ; le temps d'ouverture ; le temps de réponse du frein (dans le sens de la fermeture) en cas de coupure de l'alimentation électrique de l'actionneur ; la possibilité de fermer le frein de façon progressive pour freiner la descente d'une charge.

L'actionneur utilisé pour l'ouverture d'un frein peut être électrohydraulique, électromagnétique ou électromécanique.

Les actionneurs électrohydrauliques présentent des risques de fuite de fluide. En cas de fuite, l'actionneur peut devenir inopérant, ce qui entraîne un arrêt de la production pour pouvoir réparer et/ ou changer l'actionneur. Pour que le circuit d'huile soit fermé et l'huile (le fluide) confinée, les actionneurs électrohydrauliques sont équipés d'un certain nombre de joints hermétiques, qui sont autant de pièces d'usure nécessitant d'être régulièrement remplacées, ce qui induit des arrêts de production indésirables et des coûts de maintenance non négligeables.

En outre, lorsque le frein est destiné à être utilisé dans un environnement très chaud, par exemple dans une usine sidérurgique, le fluide de l'actionneur électrohydraulique doit être une huile stable à haute température. Au-delà d'une certaine température, les huiles des actionneurs connus présentent toutes des risques d'inflammabilité ; les conséquences d'une fuite d'huile peuvent alors être dramatiques. A l'inverse, dans des environnements très froids, il peut être nécessaire d'équiper l'actionneur d'un système de chauffage du fluide, qui vient grever le poids et le coût de revient de l'actionneur et augmente les risques de panne. De surcroît, les huiles sont généralement des contaminants environnementaux. Certes, il existe des huiles peu inflammables et/ou biodégradables, mais elles sont généralement plus chères et moins efficaces.

Dépourvus de circuit d'huile, les actionneurs électromagnétiques ou électromécaniques (à billes ou à vis par exemple) ne présentent pas les inconvénients précités. Mais ils pâtissent généralement d'un temps de réponse (à la fermeture, en cas de panne électrique) plus long, voire trop long.

On connaît par ailleurs l'actionneur électromécanique centrifuge divulgué par GB687222. Cet actionneur comprend :
- une tige d'actionnement montée coulissante selon une direction axiale, le coulissement de la tige d'actionnement vers l'extérieur de l'actionneur entraînant la fermeture du frein tandis que son coulissement vers l'intérieur entraîne l'ouverture du frein,
- un ressort hélicoïdal qui, en compression, tend à déplacer la tige d'actionnement vers l'intérieur de l'actionneur (fermeture du frein),
- un moteur électrique,
- un arbre de section carrée entraîné en rotation par le moteur électrique,
- deux bras inférieurs dont les extrémités proximales sont rigidement fixées sur l'arbre en un point d'attache bas de celui-ci,
- une tulipe montée glissante sur l'arbre entre une position basse de repos située au-dessus du point d'attache des bras inférieurs et une position haute qui dépend de la vitesse de rotation de l'arbre, laquelle tulipe tend à comprimer le ressort et à déplacer la tige d'actionnement vers l'extérieur lorsqu'elle s'éloigne de sa position basse sous l'effet de la rotation de l'arbre,
- deux bielles radiales supérieures articulées sur la tulipe par leur extrémité proximale,
- deux éléments de liaisons massiques reliant, de chaque côté de l'arbre les extrémités distales de l'un des bras inférieurs et de l'une des bielles supérieures.

Lorsque le moteur est à l'arrêt, la tulipe est en position basse et les bielles supérieures sont repliées contre l'arbre. La rotation de l'arbre entraîne le déploiement des bielles supérieures, entraînées par les éléments de liaison massiques propulsés radialement vers l'extérieur par la force centrifuge, ce qui entraîne le déplacement de la tulipe vers le haut, la compression du ressort et l'ouverture subséquente du frein. La compression finale du ressort dépend de la course de la tulipe et donc, entre autres, de la vitesse de rotation du moteur.

Ce frein présente l'avantage d'être dépourvu de circuit d'huile mais, compte tenu de son architecture, il possède une course faible qui limite ses possibilités d'utilisation.

### Exposé de l'invention

L'invention vise à pallier au moins l'un des inconvénients précités en proposant un actionneur électromécanique centrifuge ayant une course supérieure aux actionneurs électromécaniques connus afin de pouvoir être utilisé dans un frein de sécurité d'un engin de levage susceptible de soulever des charges très lourdes, par exemple de 50 à 500 tonnes. L'invention vise aussi à fournir un actionneur ayant un temps de réponse considérablement réduit.

En particulier, un objectif de l'invention est de fournir un actionneur électromécanique ayant une course pouvant aller jusqu'à 60mm et un temps de réponse de moins de 300ms en cas de panne électrique.

Pour ce faire l'invention propose un actionneur électromécanique comprenant :
- un moteur,
- un arbre entraîné en rotation par le moteur,
- un piston, pouvant être déplacé selon une direction axiale entre une position basse et une position haute,
- une tulipe supérieure, qui est montée glissante sur l'arbre et vient s'appuyer sur le piston lorsque l'arbre est entraîné en rotation.

L'actionneur électromécanique selon l'invention est caractérisé en ce qu'il comprend :
- une tulipe inférieure fixée sur l'arbre,
- un ou plusieurs (de préférence au moins deux) bras s'étendant radialement, fixés sur l'arbre entre les tulipes inférieure et supérieure,
- pour chacun desdits bras, une masselotte ayant une forme allongée selon la direction axiale, ladite masselotte étant montée glissante sur ledit bras,
- pour chacune desdites masselottes, une rampe inférieure et une rampe supérieure en contact avec les extrémités axiales de la masselotte, lesquelles rampes inférieure et supérieure suivent des courbes partant respectivement des tulipes inférieure et supérieure et s'éloignant de l'arbre en direction de l'autre tulipe, chacune des masselottes étant ainsi interposée entre deux rampes afin de maintenir les tulipes écartées l'une de l'autre,
- un électroaimant pour le maintien du piston en position haute.

Selon des modes de réalisation particuliers de l'invention, l'actionneur électromécanique répond en outre aux caractéristiques suivantes, mises en oeuvre individuellement ou selon toute combinaison techniquement possible et opérante.

Dans certains modes de réalisation, l'électroaimant comprend une carcasse contenant une bobine, incorporée dans le carter de l'actionneur, par exemple sur une paroi supérieure dudit carter, et le piston comprend une armature configurée pour être attirée par ladite bobine.

Dans certains modes de réalisation, chaque masselotte présente une roulette à chacune de ses extrémités axiales, configurée pour coopérer avec un rail ménagé dans la rampe correspondante.

Dans certains modes de réalisation, chacune des rampes supérieures et inférieures possède une butée à son extrémité libre, empêchant l'extrémité axiale de la masselotte associée de se désolidariser de ladite rampe.

Dans certains modes de réalisation, les bras sont au nombre de trois, agencés à 120° les uns des autres autour de l'arbre, de même que les masselottes, les rampes inférieures (partant de la tulipe inférieure) et les rampes supérieures (partant de la tulipe supérieure). Les efforts auxquels l'arbre est soumis par l'intermédiaire des rampes et tulipes sous l'effet du déplacement radial des masselottes sont ainsi parfaitement équilibrés, ce qui permet à la tulipe supérieure de coulisser le long de l'arbre avec des frottements limités et sans risque de se coincer et évite de plus à terme tout fléchissement de l'arbre.

L'invention s'étend à un frein négatif équipé d'un actionneur selon l'invention. Plus particulièrement, l'invention s'étend à un frein négatif, comprenant :
- un disque,
- une pince comportant deux mâchoires encadrant le disque,
- un ressort configuré pour imposer un effort de pression sur au moins l'une desdites mâchoires dans le sens de la fermeture de la pince,
- un actionneur configuré pour contrecarrer l'action du ressort et permettre l'ouverture de la pince,
caractérisé en ce que l'actionneur est un actionneur selon l'invention c'est-à-dire tel que décrit précédemment.

Dans certains modes de réalisation, le ressort et l'actionneur sont dissociés et agencés en parallèle l'un de l'autre, le piston de l'actionneur n'agissant pas directement sur le ressort.

Dans certains modes de réalisation :
- la direction axiale de l'actionneur et l'axe du ressort sont verticaux, tandis que la direction de déplacement des mâchoires du frein est horizontale,
- le frein comprend un balancier supérieur monté pivotant autour d'un axe horizontal, et relié aux mâchoires par un mécanisme configuré pour transformer un mouvement de pivotement du balancier vers le haut, respectivement vers le bas, en un effort horizontal sur les mâchoires dans le sens de l'ouverture, respectivement de la fermeture, desdites mâchoires,
- le ressort présente une extrémité supérieure reliée au balancier de façon à tirer celui-ci vers le bas (c'est-à-dire dans le sens de la fermeture du frein),
- le piston de l'actionneur comprend une tige d'actionnement s'étendant en saillie 'd'un carter de l'actionneur, laquelle tige d'actionnement est reliée au balancier (104) de façon à pousser celui-ci vers le haut (dans le sens de l'ouverture du frein) lorsque le piston -et donc la tige d'actionnement- est déplacé vers le haut

### Brève description des dessins

L'invention, selon un exemple de réalisation, sera bien comprise et ses avantages apparaitront mieux à la lecture de la description détaillée qui suit, donnée à titre indicatif et nullement limitatif, en référence aux dessins annexés dans lesquels :
[Fig. 1] la figure 1 représente un exemple de réalisation d'un actionneur selon l'invention, vu en perspective avec une partie de son carter arrachée, le piston et la tulipe supérieure de l'actionneur étant en position basse ;
[Fig. 2] la figure 2 montre l'actionneur de la figure 1, toujours en perspective mais avec le piston et la tulipe supérieure dans une position intermédiaire ;
[Fig. 3] la figure 3 montre l'actionneur des figures 1 et 2, toujours en perspective mais avec le piston et la tulipe supérieure en position haute ;
[Fig. 4] la figure 4 montre l'actionneur des figures 1 à 3, en perspective et avec le piston maintenu en position haute tandis que la tulipe supérieure est redescendue en position basse ;
[Fig. 5] la figure 5 est une vue en perspective d'un frein à disque intégrant un actionneur selon l'invention, qui peut être celui des figures 1 à 4.
[Fig. 6] la figure 6 représente le frein à disque de la figure 5, vu en perspective depuis un autre point de vue,
[Fig.7] la figure 7 est une vue en perspective d'un frein à tambour intégrant un actionneur selon l'invention, qui peut être celui des figures 1 à 4.

Les éléments identiques représentés sur les figures précitées sont identifiés par des références numériques identiques.

### Description détaillée

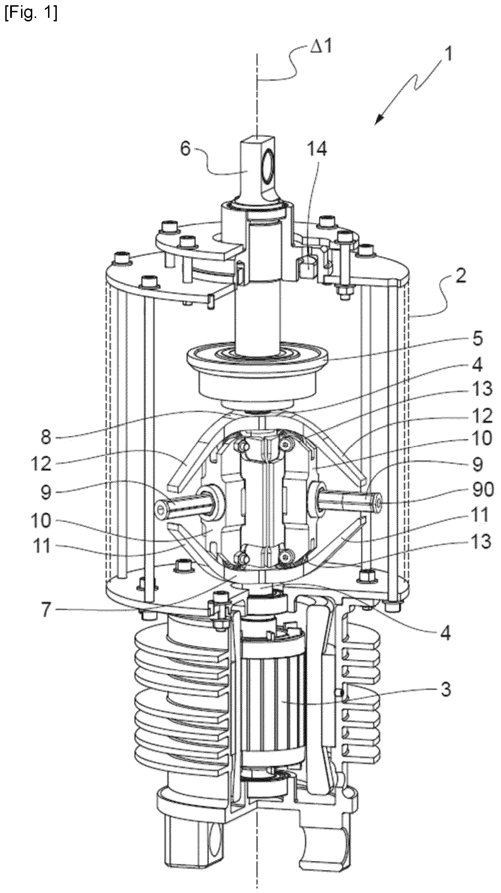

Les figures 1 à 4 représentent un actionneur 1 selon l'invention. Celui-ci comprend :
- un carter 2, représenté en partie transparent et dont une partie est arrachée sur les figures afin de montrer les différentes pièces qui constituent l'actionneur ;
- un moteur électrique 3 agencée en partie basse de l'actionneur ; à titre d'exemple, le moteur 3 peut être un moteur asynchrone triphasé standard, alimenté en 400V,
- un arbre 4, qui s'étend selon une direction axiale Δ₁ de l'actionneur et est entraîné en rotation par le moteur 3 ; à l'utilisation, en particulier lorsqu'il est associé à un frein de sécurité d'un engin de levage, l'actionneur 1 est agencé de façon à ce que sa direction axiale Δ₁ soit verticale,
- un piston 5 monté glissant sur l'arbre 4, pourvu d'une armature configurée pour être attirée par l'électroaimant 14 décrit ci-après, et pourvu d'une tige d'actionnement 6 qui dépasse d'une paroi supérieure 20 du carter 2 ;
- une tulipe inférieure 7, fixée sur l'arbre 5 en un point bas de celui-ci, c'est-à-dire à proximité du moteur 3 ;
- une tulipe supérieure 8 montée glissante sur l'arbre 5 au-dessus de la tulipe inférieure 7 ;
- trois bras 9 qui s'étendent radialement, lesquels bras sont agencés à 120° les uns des autres et fixés sur l'arbre 4 entre les tulipes inférieure et supérieure ;
- trois masselottes 10, chaque masselotte étant montée glissante sur l'un des bras 9 ; à cette fin, chaque masselotte présente un trou central par lequel elle est enfilée sur le bras 9 ;
- un électroaimant 14, représenté ici de façon très schématique, la référence 14 pointant une carcasse intégrant une bobine (non représentée).

Les masselottes présentent une dimension selon la direction axiale qui correspond sensiblement à la course souhaitée pour l'actionneur. Cette dimension est avantageusement de l'ordre de 60mm.

Pour chaque bras 9, l'actionneur 1 comprend une rampe inférieure 11 formée dans le prolongement de la tulipe inférieure 7. Lorsque le moteur est à l'arrêt (fig. 1), la rampe inférieure 11 s'étend de la tulipe inférieure 7 jusqu'à l'extrémité distale 90 du bras. La rampe inférieure 11 suit une courbe inscrite dans un plan longitudinal (vertical) comprenant l'axe de l'arbre 4 et l'axe dudit bras 9 ; cette courbe part de la tulipe inférieure 7 et s'éloigne radialement de l'arbre 4 en direction de la tulipe supérieure 8 (c'est-à-dire vers le haut sur les figures annexées) .

De façon similaire, pour chaque bras 9, l'actionneur 1 comprend une rampe supérieure 12 formée dans le prolongement de la tulipe supérieure 8. Lorsque le moteur est à l'arrêt (fig. 1), la rampe supérieure 12 s'étend de la tulipe supérieure 8 jusqu'à l'extrémité distale 90 du bras. La rampe supérieure 12 suit ainsi une courbe inscrite dans le plan longitudinal qui comprend l'axe de l'arbre 4 et l'axe dudit bras 9 ; cette courbe part de la tulipe supérieure 8 et s'éloigne radialement de l'arbre 4 en direction de la tulipe inférieure 7 (vers le bas sur les figures).

Chaque masselotte 10 s'inscrit lui aussi essentiellement dans le plan longitudinal qui comprend l'axe de l'arbre 4 et l'axe du bras 9 sur lequel la masselotte est montée glissante. La masselotte 10 est enchâssé entre les rampes inférieure 11 et supérieure 12 associées audit bras. Il présente une forme allongée selon la direction axiale. La longueur (dimension selon la direction axiale) du masselotte 10 définit la distance qui sépare les tulipes supérieure et inférieure lorsque l'actionneur est au repos (moteur à l'arrêt, fig. 1). Comme on le comprendra plus loin, la longueur de la masselotte définit aussi la course maximale possible de l'actionneur. La longueur de la masselotte permet aussi et surtout d'augmenter la masse de la masselotte et ainsi l'effort de l'actionneur. En fonctionnement, la course réelle de la tige d'actionnement 6 dépend de la distance radiale parcourue par les masselottes 10 sur les bras 9.

A chacune de ses extrémités axiales, la masselotte 10 comprend un roulement 13 engagé dans un rail (non visible) ménagé dans la rampe 11 ou 12 contre laquelle ladite extrémité axiale de la masselotte s'appuie.

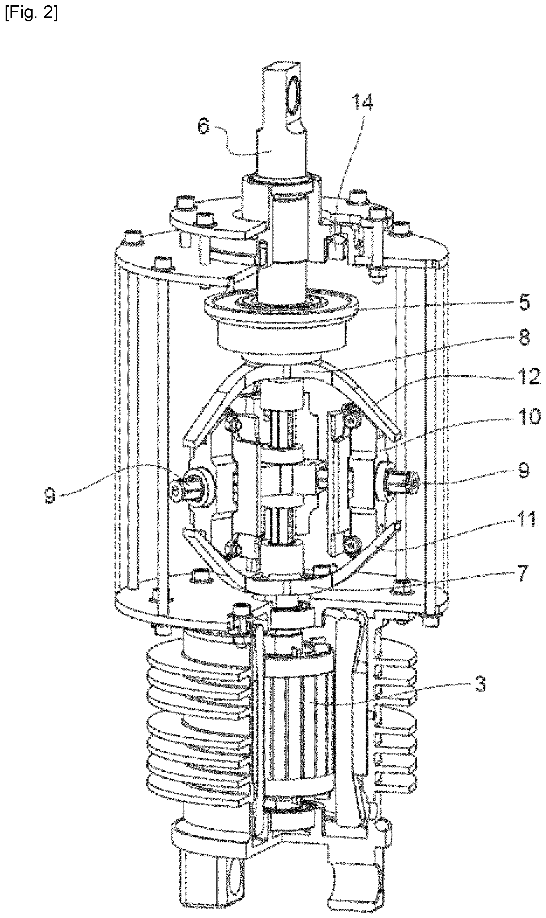

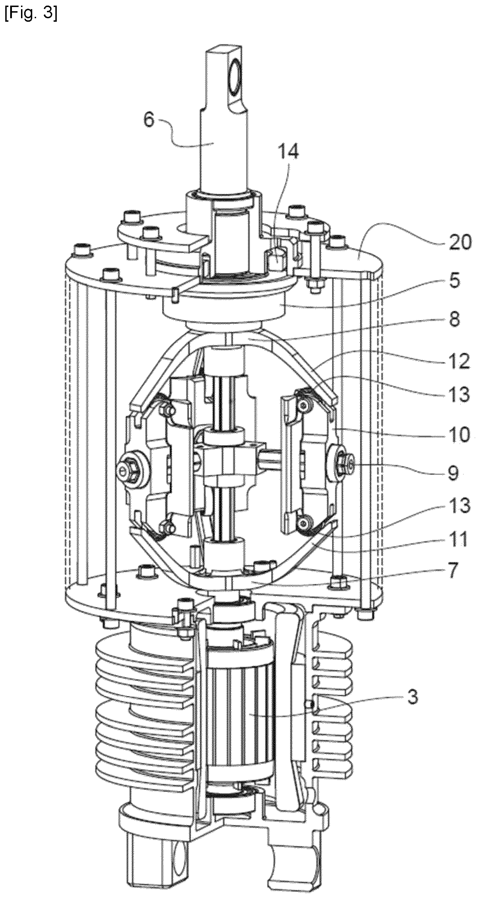

Lorsque le moteur est au repos, les masselottes 10 sont plaquées contre l'arbre 4. Lorsque le moteur est en mis marche et que l'arbre 4 tourne, les masselottes 10 sont propulsées radialement vers l'extérieur par la force centrifuge. Elles poussent alors sur les rampes supérieure 12 et inférieure 11 auxquelles elles sont respectivement associées, écartant la tulipe supérieure 8 (glissante) de la tulipe inférieure 7 (fixe), ce qui provoque le déplacement du piston 5 vers le haut comme on peut l'observer sur les fig. 2 et 3.

La fig. 3 illustre la position extrême des masselottes 10, lorsque les extrémités radiales des masselottes atteignent les extrémités des rampes 11 et 12. Le piston 5 est alors dans une position haute, dans laquelle son armature est plaquée contre la paroi supérieure 20 du carter 2 ou plutôt contre la carcasse de l'électroaimant 14, et la tige d'actionnement 6 est en position d'extension maximale. L'ouverture du frein, c'est-à-dire le déplacement du piston depuis sa position basse (fig. 1) jusqu'à sa position haute (fig. 3) prend de l'ordre de 200ms.

En cas de panne électrique alors que l'actionneur est dans la configuration de la Fig. 3, le moteur 3 et l'arbre 4 s'arrêtent et l'électroaimant 14 est désactivé. N'étant plus soumises à la force centrifuge, les masselottes 10 reviennent dans leur position initiale contre l'arbre 4 sous l'effet de leur propre poids et de celui de la tulipe supérieure 8.. La tulipe supérieure 8 et le piston 5 se retrouvent en position basse, la tige d'actionnement étant alors dans sa position rentrée, comme illustré sur la Fig. 1. La descente du piston et de la tulipe supérieure 8, légèrement ralentie par les masselottes 10, peut prendre jusqu'à 300 ms.

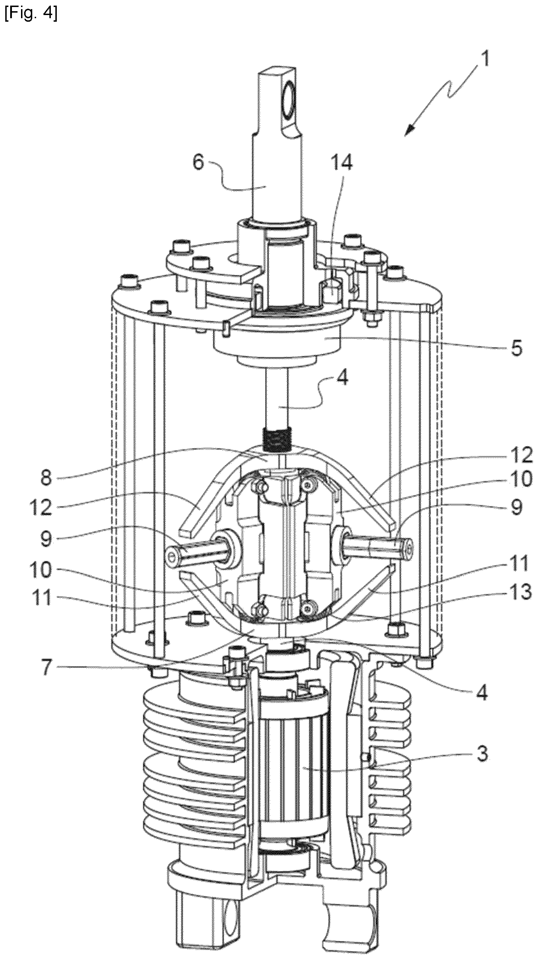

Si l'on arrête le moteur 3 alors que le piston 5 est en position haute et l'électroaimant 14 actif, là encore, n'étant plus soumises à la force centrifuge, les masselottes 10 reviennent dans leur position initiale contre l'arbre 4, sous l'effet de leur poids et de celui de la tulipe supérieure 8. L'actionneur peut comprendre de plus un petit ressort au-dessus de la tulipe supérieure 8 (on peut apercevoir ce ressort sur la fig. 4) permettant de faire descendre un peu plus vite la tulipe supérieure 8 et les masselottes 10. Ce ressort permet de vaincre l'inertie du mécanisme au début du mouvement de redescente de la tulipe et des masselottes.

Ainsi, si l'on arrête le moteur et que l'électroaimant 14 est activé, la tulipe supérieure 8 se retrouve en position basse tandis que le piston 5, retenu par l'électroaimant 14, reste en position haute comme illustré sur la Fig. 4.L'électroaimant permet donc de couper le moteur tout en maintenant l'effort de l'actionneur, ce qui permet d'éviter que le moteur ne surchauffe et n'entre en défaillance. L'électroaimant améliore ainsi la fiabilité et la robustesse de l'actionneur et prolonge sa durée de vie.

En cas de panne électrique alors que l'actionneur est dans la configuration de la Fig. 4, l'électroaimant 14 est instantanément désactivé et le piston 5 tombe sous l'effet de son poids. N'étant pas freiné par la tulipe supérieure 8 et les masselottes 10, le piston 5 revient dans sa position basse en un temps (dit temps de réponse) de l'ordre de 100ms. Si l'actionneur est associé à un frein de sécurité d'un engin de levage, la chute de la charge portée par l'engin de levage est ainsi instantanément stoppée. L'électroaimant 14 permet donc aussi de réduire considérablement le temps de réponse de l'actionneur et du frein associé.

Si la fermeture du frein est souhaitée en fonctionnement normal, c'est-à-dire en l'absence de panne électrique, il est possible d'obtenir une fermeture moins brusque (voire progressive) du frein, en désactivant l'électroaimant 14 tout en maintenant, dans un premier temps, le piston 5 en position haute grâce au moteur 3 puis en arrêtant le moteur. Une décélération du moteur (avant son arrêt total) peut même permettre de gérer la descente de la charge.

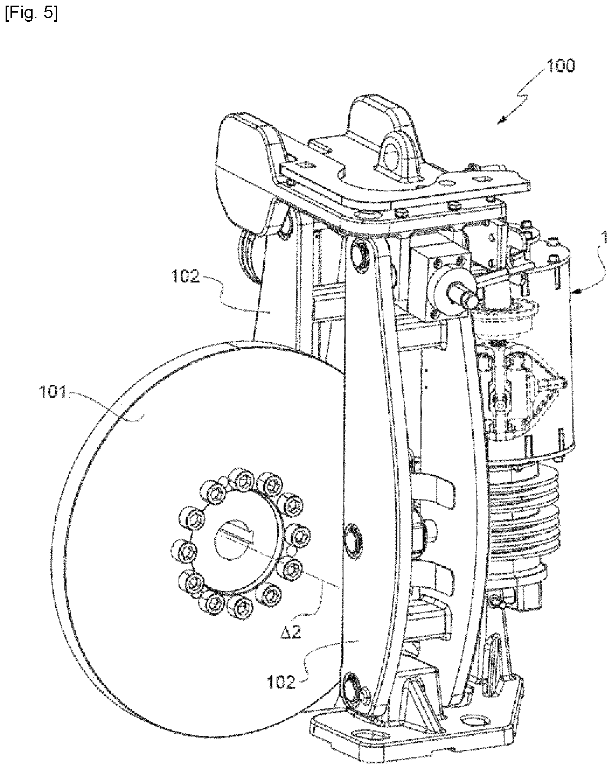

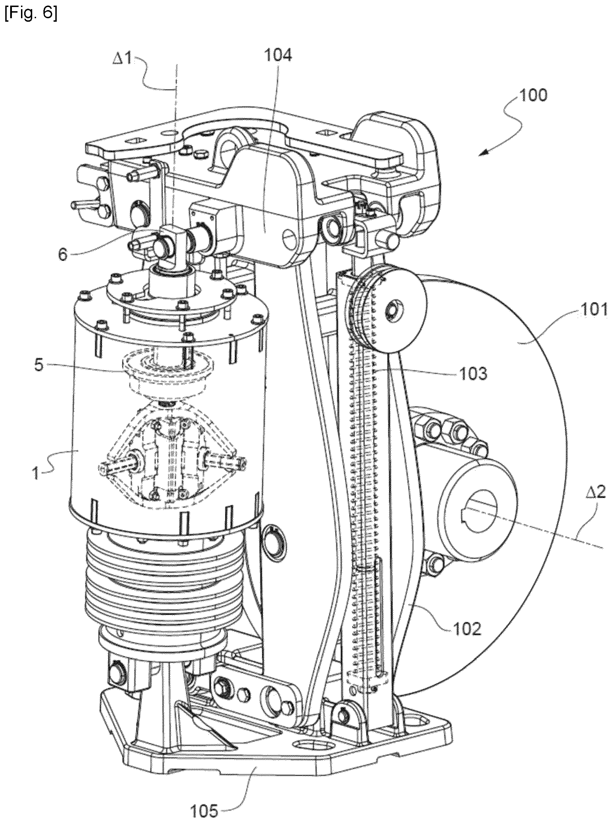

Les fig. 5 et 6 montrent l'actionneur des fig. 1 à 4 intégré dans un frein à disque 100. Ce frein comprend :
- un disque 101, destiné à être monté sur une ligne à freiner (non représentée),
- de part et d'autre du disque 101, des mâchoires 102 parallèles aux faces frontales du disque 101 et formant une pince venant serrer le disque 101,
- un ressort 103, par exemple un ressort hélicoïdal tel qu'illustré à la Fig. 6, configuré pour pousser l'une ou les deux mâchoires dans le sens de la fermeture du frein (c'est-à-dire l'une vers l'autre),
- l'actionneur 1.

Dans l'exemple illustré, le ressort 103 est sensiblement parallèle à la direction axiale Δ₁ de l'actionneur, celle-ci étant orthogonale à la direction de travail Δ₂ des mâchoires (c'est-à-dire à l'axe du disque 101). On comprendra aisément que cette architecture permet d'obtenir un frein particulièrement compact, de dimension limitée selon la direction verticale.

Dès lors, le frein comprend de plus un balancier 104 et un mécanisme apte à transformer un mouvement de pivotement de ce balancier vers le haut et vers le bas en un mouvement des mâchoires 102 dans le sens de l'ouverture et de la fermeture du frein respectivement. Ce mécanisme n'est pas montré dans le détail, l'homme du métier étant à même de le concevoir à l'aide de ses connaissances générales.

L'extrémité inférieure du carter 2 de l'actionneur est fixée sur un socle 105 du frein. De même, l'extrémité inférieure du ressort 103 est fixée audit socle 105.

La tige d'actionnement 6 de l'actionneur est reliée au balancier 104 de façon à ce que l'extension de cette tige entraîne le pivotement du balancier vers le haut, c'est-à-dire impose aux mâchoires 102 un effort tendant à ouvrir le frein. A l'inverse, l'extrémité supérieure du ressort est reliée au balancier 104 de façon à ce que le ressort (qui, en l'exemple illustré, travaille en traction) entraîne le pivotement du balancier vers le bas, c'est-à-dire impose aux mâchoires 102 un effort tendant à fermer le frein.

La course de l'actionneur 1 permet de contrer l'action du ressort 103 et décoller les mâchoires 102 du disque 101 pour ouvrir le frein.

A noter que la compression du ressort dépend du déplacement de la tige d'actionnement 6 de l'actionneur, donc de l'effort de l'actionneur, celui-ci dépendant non seulement de la vitesse de rotation du moteur 3 mais aussi de la course de la tulipe elle-même (plus la tulipe s'approchera de la position haute, plus l'effort centrifuge sera grand donc plus l'effort de l'actionneur sera grand). Ainsi, même si le moteur est à une vitesse stabilisée, l'effort continue d'augmenter avec la course de la tulipe. Or dans un actionneur selon l'invention, la tulipe peut avoir une course plus grande que dans un actionneur de l'art antérieur tel celui de GB687222. A moteur égal, l'actionneur selon l'invention peut donc développer un effort supérieur aux actionneurs antérieurs.

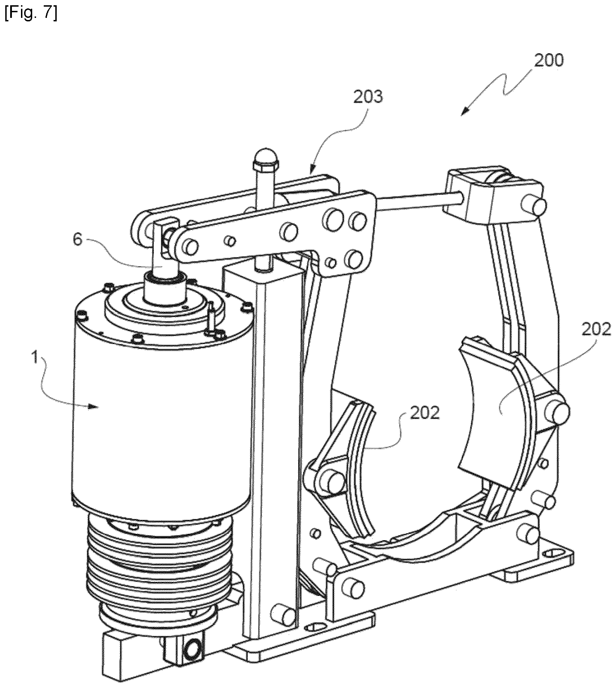

La figure 7 montre un frein à tambour 200. Ce frein comprend de façon usuelle deux sabots 202 (assimilables aux mâchoires revendiquées) formant une pince venant serrer un tambour (non représenté), et il est remarquable en ce qu'il comprend un actionneur 1 selon l'invention. Il ne sera pas décrit plus en détail ici, l'homme du métier étant à même de concevoir le mécanisme 203 permettant de transformer les déplacements verticaux de la tige d'actionnement 6 de l'actionneur en efforts des sabots 202 contre le tambour.

L'actionneur 1 étant dépourvu de circuit d'huile, il peut être utilisé dans des environnements très chauds sans risque d'incendie et dans des environnements très froids sans risque de solidification de l'huile.

Par ailleurs, sa course étant relativement longue, il peut développer un effort important permettant son utilisation dans un frein de sécurité d'un engin de levage destiné à soulever des charges pouvant aller jusqu'à 500 tonnes voire plus. L'utilisation de l'électroaimant 14 de l'actionneur permet de garder le frein ouvert sans utiliser le moteur 3 et d'obtenir la fermeture instantanée (en moins de 100ms) du frein en cas de coupure de courant.

## Revendications

1. Actionneur électromécanique (1) comprenant :
- un moteur (3),
- un arbre (4) entraîné en rotation par le moteur,
- un piston (5), pouvant être déplacé selon une direction axiale (Δ₁) entre une position basse et une position haute,
- une tulipe supérieure (8), qui est montée glissante sur l'arbre (4) et vient s'appuyer sur le piston (5) lorsque l'arbre est entraîné en rotation,
**caractérisé en ce qu'**il comprend :
- une tulipe inférieure (7) fixée sur l'arbre ,
- un ou plusieurs bras (9) s'étendant radialement, fixés sur l'arbre (4) entre les tulipes inférieure (7) et supérieure (8),
- pour chacun desdits bras (9), une masselotte (10) ayant une forme allongée selon la direction axiale, ladite masselotte étant montée glissante sur ledit bras,
- pour chacune desdites masselottes (10), une rampe inférieure (11) et une rampe supérieure (12) en contact avec les extrémités axiales de la masselotte, lesquelles rampes inférieure et supérieure suivent des courbes partant respectivement des tulipes inférieure (7) et supérieure (8) et s'éloignant de l'arbre en direction de l'autre tulipe, chacune des masselottes étant ainsi interposée entre deux rampes afin de maintenir les tulipes écartées l'une de l'autre,
- un électroaimant (14) pour le maintien du piston (5) en position haute.

2. Actionneur électromécanique (1) selon la revendication 1, dans lequel l'électroaimant (14) comprend une carcasse contenant une bobine, incorporée dans un carter (2) de l'actionneur, et le piston (5) comprend une armature configurée pour être attirée par ladite bobine.

3. Actionneur électromécanique (1) selon l'une des revendications 1 ou 2, dans lequel chaque masselotte (10) présente un roulement (13) à chacune de ses extrémités axiales, configuré pour coopérer avec un rail ménagé dans la rampe supérieure ou inférieure (11, 12) correspondante.

4. Actionneur électromécanique (1) selon l'une des revendications 1 à 3, dans lequel chacune des rampes supérieures et inférieures (11, 12) possède une butée à son extrémité libre, empêchant l'extrémité axiale de la masselotte (10) associé de se désolidariser de ladite rampe.

5. Actionneur électromécanique (1) selon l'une des revendications 1 à 4, dans lequel les bras (9) sont au nombre de trois, agencés à 120° les uns des autres autour de l'arbre (4), de même que les masselottes (10), les rampes inférieures (11) et les rampes supérieures (12).

6. Frein négatif (100 ; 200), comprenant :
- un disque (101) ou un tambour,
- une pince comportant deux mâchoires (102 ; 202) encadrant le disque ou tambour,
- un ressort (103) configuré pour imposer un effort de pression sur au moins l'une desdites mâchoires (102 ; 202) dans le sens de la fermeture de la pince,
- un actionneur (1) configuré pour contrecarrer l'action du ressort et permettre l'ouverture de la pince,
**caractérisé en ce que** l'actionneur (1) est conforme à l'une des revendications précédentes.

7. Frein négatif selon la revendication 6, dans lequel le ressort (103) et l'actionneur (1) sont dissociés et agencés en parallèle l'un de l'autre, le piston (5) de l'actionneur n'agissant pas directement sur le ressort.

8. Frein négatif selon l'une des revendications 6 ou 7, dans lequel :
- la direction axiale (Δ₁) de l'actionneur (1) et l'axe du ressort (103) sont verticaux, tandis que la direction (Δ₂) de déplacement des mâchoires (102) est horizontale,
- le frein comprend un balancier supérieur (104) monté pivotant autour d'un axe horizontal, et relié aux mâchoires (102) par un mécanisme configuré pour transformer un mouvement de pivotement du balancier vers le haut, respectivement vers le bas, en un effort horizontal sur les mâchoires dans le sens de l'ouverture, respectivement de la fermeture, desdites mâchoires,
- le ressort (103) présente une extrémité supérieure reliée au balancier (104) de façon à tirer celui-ci vers le bas,
- le piston (5) de l'actionneur comprend une tige d'actionnement (6) s'étendant en saillie d'un carter (2) de l'actionneur, laquelle tige d'actionnement (6) est reliée au balancier (104) de façon à pousser celui-ci vers le haut lorsque le piston est déplacé vers le haut.
